(19) Europäisches Patentamt
European Patent Office
Office européen des brevets

(11) **EP 2 037 665 A2**

(12) **EUROPEAN PATENT APPLICATION**

(43) Date of publication:
**18.03.2009 Bulletin 2009/12**

(51) Int Cl.:
***H04M 11/06*** *(2006.01)*

(21) Application number: **08253009.8**

(22) Date of filing: **12.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.09.2007 JP 2007240019**

(71) Applicant: **NEC Corporation**
**Minato-ku**
**Tokyo 108 (JP)**

(72) Inventor: **Okado, Hiroshi**
**Tokyo 108-8001 (JP)**

(74) Representative: **MacDougall, Alan John Shaw et al**
**Mathys & Squire LLP**
**120 Holborn**
**London**
**EC1N 2SQ (GB)**

(54) **Communication device communication system control method and storage medium**

(57) The present invention provides a communication system that can suppress the crosstalk of a communication device installed in a remote terminal. The communication system according to the invention is the communication system configured so that a first communication device (401) and a second communication device (202) are connected via a communication line (500), wherein the first communication device (401) is installed in a remote terminal (400) that exists between a center office (100) and a subscriber house (200). And the first communication device (401) controls a transmission output of an xDSL which is used on a communication line (500) based on the frequency characteristic of attenuation amount in a center office line (600) between the center office (100) and the remote terminal (400).

FIG. 4

## Description

This application is based upon and claims the benefit of priority from Japanese paten application No. 2007-240019, filed on September 14, 2007, the disclosure of which is incorporated herein in its entirety by reference.

## BACKGROUND OF THE INVENTION

### TECHNICAL FIELD

The present invention pertains to a communication device, a communication system, a control method and a storage medium storing a control program that are applied to an xDSL (x Digital Subscriber Line) (x is a collective designation of A, H, S, V and the like) that performs a data transmission at a high speed of several M bits/second via a metallic cable such as a telephone line.

### BACKGROUND ART

An xDSL has widespread as a high speed digital communication system using the existent telephone line. The xDSL uses a metallic cable such as a telephone line to enable a data transmission at a high speed of several M bits/second. It should be noted that, as the xDSL, there are ADSL (Asymmetric Digital Subscriber Line), SDSL (Symmetric Digital Subscriber Line), HDSL (High bit-rate Digital Subscriber Line), VDSL (Very high bit-rate Digital Subscriber Line) and the like, which are divided according to differences in transmission speed, symmetry/asymmetry of the speeds and the like. It should be noted that these are collectively referred to as "xDSL".

The xDSL is referred to as a best effort type service, and its transmission speed varies depending on environmental conditions such as a transmission distance of a communication line and noises. Typically, in the environmental conditions of a short transmission distance of the communication line and a few noises, the transmission speed becomes fast. Moreover, in the environmental conditions of a long transmission distance of the communication line and a lot of noises, the transmission speed becomes slow.

Moreover, the xDSL employs a DMT (Discrete Multi Tone) method as a modulation method. In the DMT method, before a modem starts communication, initialization training is performed to measure the transmission distance of the communication line or an SNR (Signal to Noise Ratio) of each carrier. Then, based on the measured SNR of each carrier, a bit rate to be arranged to each carrier is calculated, and based on the above described calculated bit rate, a final transmission speed is determined.

For example, the SNR of a carrier number i (i is an arbitrary integer number) is SNRi, and a summation of the bit rates to be arranged to the respective carriers having the carrier numbers i from m-th to n-th Totalrate is calculated by formula (1). Then, based on the calculated summation of the bit rates (Totalrate), the final transmission speed is determined.

$$Totalrate = S \times \sum_{i=m}^{n} \log_2\left(1 + \frac{SNR_i}{\Gamma}\right) \quad \cdots \quad \text{Formula(1)}$$

Here, S denotes a symbol rate, and S = 4 kHz in the case of the ADSL compliant with G.992.1. Moreover, $\Gamma$ is an effective SNR gap, and $\Gamma$ = 9.75 dB if an error rate is $10^{-7}$.

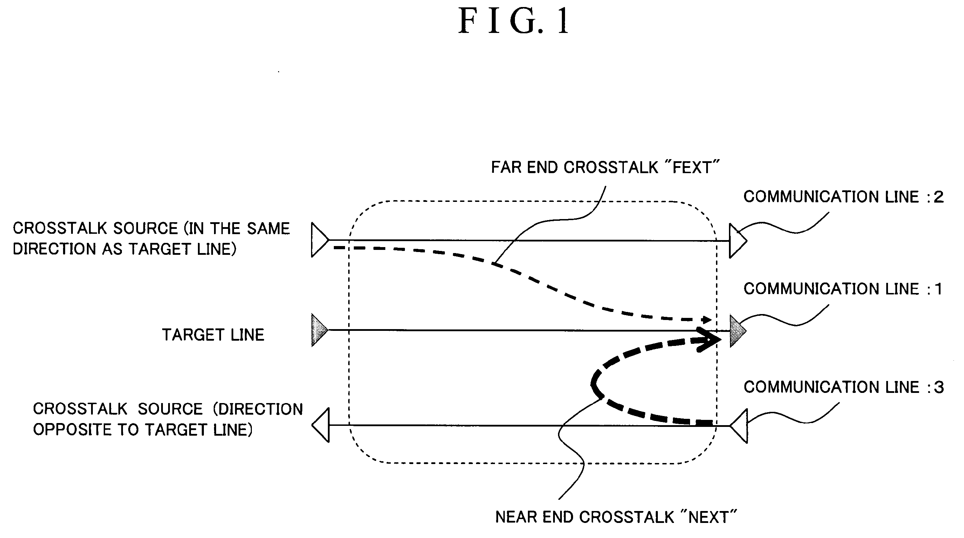

Moreover, a most dominant noise in the xDSL is crosstalk from another line. The crosstalk includes near end crosstalk "NEXT" (a crosstalk source and a source subjected to the crosstalk are in the opposite direction) and far end crosstalk "FEXT" (the crosstalk source and the source subjected to the crosstalk are in the same direction), as shown in Fig. 1. Typically, the far end crosstalk "FEXT" has a less effect of the crosstalk than the near end crosstalk "NEXT". Hereinafter, with reference to Fig. 1, the near end crosstalk "NEXT" and the far end crosstalk "FEXT" will be described in detail.

If it is assumed that a communication line (1) shown in Fig. 1 is a measurement target, the crosstalk having a communication line (2) through which a signal flows in the same direction as the communication line (1) focused as the measurement target, as "crosstalk source", is the far end crosstalk "FEXT". Since a signal to be originally transmitted is attenuated along with the transmission distance of the communication line, a crosstalk amount of this far end crosstalk "FEXT" is also relatively attenuated depending on the transmission distance of the communication line.

Moreover, the crosstalk having a communication line (3) through which the signal flows in the direction opposite to the communication line (1) focused as the measurement target, as "crosstalk source", is the near end crosstalk "NEXT". The signal to be originally transmitted is attenuated along with the transmission distance of the communication line, whereas a crosstalk amount of the near end crosstalk "NEXT" increases in a transmission destination of the signal to be originally transmitted. Consequently, the near end crosstalk "NEXT" has a more significant effect of the crosstalk than the far end crosstalk "FEXT".

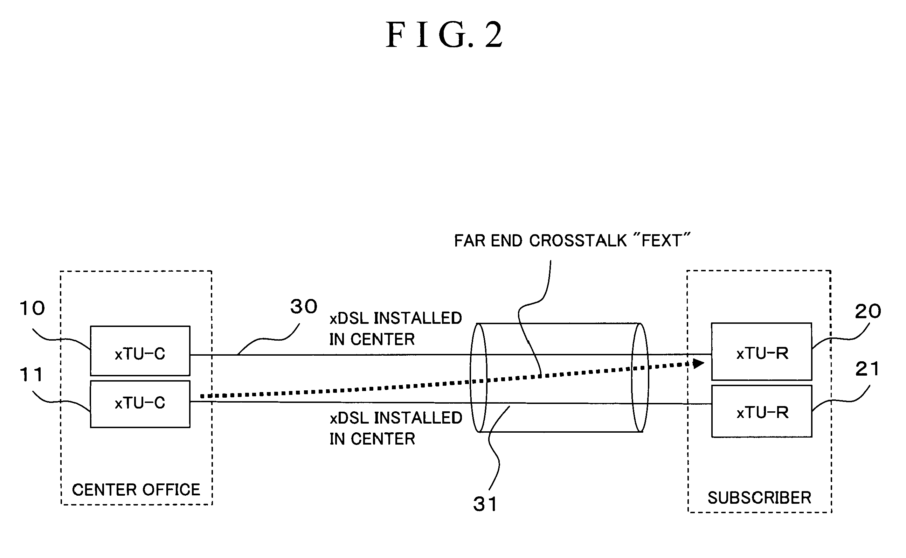

It should be noted that, in a typical system configuration of the xDSL, as shown in Fig. 2, xTU-Cs (xDSL Termination Unit-Center side) (10, 11) of the xDSL installed in a center are configured to exist in the same position.

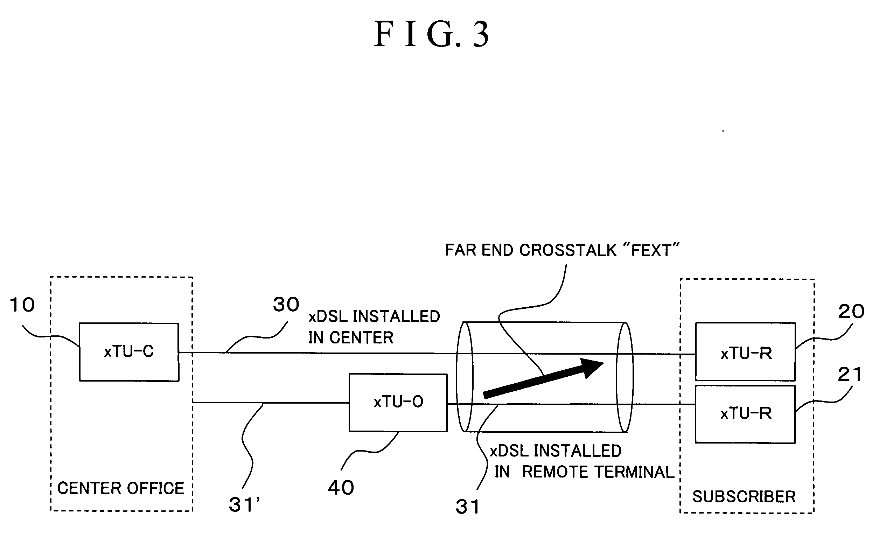

However, recently, the xDSL installed in a remote terminal as shown in Fig. 3 has been introduced, and an xTU-0 (xDSL Termination Unit-ONU) (40) of the xDSL installed in the remote terminal is installed at a site near the subscriber house. Thereby, the transmission speed of the xDSL can be increased.

In the case of changing the system configuration of the existent xDSL installed in the center as shown in Fig. 2 to the system configuration of the xDSL installed in the remote terminal as shown in Fig. 3, for example, a method for disconnecting in the middle the communication line (31) connecting from the center office to the subscriber house as shown in Fig. 2 and installing the xTU-0 (40) of the xDSL installed in the remote terminal at the disconnected section as shown in Fig. 3 is conceivable. In this case, the communication line (31') from the center office to the remote terminal can be continuously used as the line for an analog telephone.

However, when the xTU-0 (40) of the xDSL installed in the remote terminal is newly installed, it is required to regulate the transmission PSD (Power Spectrum Density) of the xTU-0 (40) of the xDSL installed in the remote terminal to prevent crosstalk of the xTU-0 (40) of the xDSL installed in the remote terminal from affecting the existent xDSL (10, 20) installed in the center in conformity with the prescriptions of the spectral management standards (JJ-100.01) of the Information Telecommunication Technology Committee (TTC).

In the case of the system configuration of the xDSL installed in the remote terminal as shown in Fig. 3, the installed positions of the xTU-C (10) installed in the center and the xTU-0 (40) of the xDSL installed in the remote terminal become different. Consequently, the far end crosstalk "FEXT" of the xTU-0 (40) of the xDSL installed in the remote terminal occurs from the middle of a communication line (30) of the existent xTU-C (10) of the xDSL installed in the center. As a result, the far end crosstalk "FEXT" occurring from the xTU-0 (40) of the xDSL installed in the remote terminal significantly affects an xTU-R (xDSL Termination Unit-Remote side) (20) of the existent xDSL (10, 20) installed in the center, which are adjacent to the xDSLs (40, 21) installed in the remote terminal.

Therefore, it is required to reduce the far end crosstalk "FEXT" of the xTU-0 (40) of the xDSL installed in the remote terminal and prevent the far end crosstalk "FEXT" from affecting the xTU-R (20) of the existent xDSL installed in the center.

A method for reducing the far end crosstalk "FEXT" of the xDSL installed in the remote terminal involves reducing the transmission output level of the xTU-0 (40) of the xDSL installed in the remote terminal.

For example, the ITU-T Recommendation G.993.1, which is a recommendation on the VDSL, defines a function of reducing the transmission output level equal to or less than 1.1MHz that is a signal band of the ADSL installed in the center.

Moreover, the ITU-T recommendation G.993.2 describes a method of controlling the transmission output level of the VDSL installed in the remote terminal to be equivalent to the effect of the crosstalk from the ADSL installed in the center.

Specifically, the transmission output level of the VDSL installed in the remote terminal is controlled so that the transmission output level of the ADSL installed in the center becomes equal to the level attenuated by the communication line.

In this case, it is required to have the known transmission output level of the ADSL installed in the center, as well as information on an attenuation amount in the communication line from the ADSL installed in the center up to a point where the far end crosstalk "FEXT" of the VDSL installed in the remote terminal is mixed in.

As a technical document that has been filed prior to the present invention, there is a document disclosing a technique for installing a DSLAM device out of the telephone center and in a portion near the subscriber (for example, refer to Japanese Patent Application Laid Open No. 2003-18319 (Patent Document 1)).

In addition, there is a document disclosing a technique for avoiding the interference between the ISDN and the xDSL in the case where the DSLAM is installed out of the center office (for example, refer to Japanese Patent Application Laid Open No. 2005-184389 (Patent Document 2)).

Also, there is a document disclosing a technique for adjusting the power spectrum density (PSD) of a transmission signal to reduce the duplication between the PSDs in different systems and reduce the crosstalk (for example, refer to Japanese Patent Application Publication No. 2000-500948 (Patent Document 3)).

Also, there is a document disclosing a technique for automatically adjusting the up transmission power of the device on the subscriber side to the optimal level (for example, refer to Japanese Patent Application Laid Open No.

2006-33379 (Patent Document 4)).

The above patent documents 1 and 2 disclose that the DSLAM is installed out of the center office. Also, the above patent document 3 discloses that the power spectrum density (PSD) of the transmission signal is adjusted. Also, the above patent document 4 discloses that the line length is calculated using a TDR (Time Domain Reflectometry) measurement.

However, in the above described Patent Documents 1 to 4, there is neither description nor suggestion of necessity of controlling the transmission output of the xDSL for use in the line between the remote terminal and the subscriber house, based on the frequency characteristic of attenuation amount in the line between the center office and the remote terminal.

That is, in the above patent documents 1 to 4, no consideration of regulating the transmission output of the communication device installed in the remote terminal is taken to prevent the crosstalk of the communication device installed in the remote terminal from affecting the existent xDSL installed in the center.

SUMMARY

The invention has been achieved in the light of the above-mentioned circumstances, and it is an object of the invention to provide a communication device, a communication system, a control method and a control program that can suppress the crosstalk of the communication device installed in the remote terminal, which is the above-mentioned problem.

<Communication device>

A communication device according to an embodiment is a communication device including a control unit that controls a transmission output of an xDSL for use in a subscriber line between a remote terminal and a subscriber house, based on a frequency characteristic of attenuation amount in a center office line between a center office and the remote terminal, wherein the communication device is installed in the remote terminal that exists between the center office and the subscriber house.

<Communication system>

A communication system according to an embodiment is a communication system including a first communication device and a second communication device connected to the first communication device via a communication line, wherein the first communication device is installed in a remote terminal that exists between a center office and a subscriber house, and the first communication device includes a control unit that controls a transmission output of an xDSL for use in the communication line based on the frequency characteristic of attenuation amount in a center office line between the center office and the remote terminal.

<Control method>

A control method according to an embodiment is a control method for use in a communication device, including a control step of controlling a transmission output of an xDSL for use in a subscriber line between a remote terminal and a subscriber house, based on a frequency characteristic of attenuation amount in a center office line between a center office and the remote terminal, wherein the communication device is installed in the remote terminal that exists between the center office and the subscriber house,.

<Storage medium storing a control program>

A storage medium storing a control program according to an embodiment is a storage medium storing a control program causing a communication device to perform a control process, including controlling a transmission output of an xDSL for use in a subscriber line between a remote terminal and a subscriber house, based on a frequency characteristic of attenuation amount in a center office line between a center office and the remote terminal, wherein the communication device is installed in the remote terminal that exists between the center office and the subscriber house.

BRIEF DESCRIPTION OF THE DRAWINGS

The objects and features of the present invention will become more apparent from the consideration of the following detailed description taken in conjunction with the accompanying drawings, in which:

Fig. 1 is a diagram for illustrating near end crosstalk "NEXT" and far end crosstalk "FEXT";

Fig. 2 is a diagram showing a system configuration in which xTU-Cs (10, 11) of an xDSL installed in a center exist in the same position;

Fig. 3 is a diagram showing a system configuration in which xTU-C (10) of the xDSL installed in the center and xTU-0 (40) of the xDSL installed in a remote terminal exist in different positions;

Fig. 4 is a diagram showing a system configuration example of a communication system according to this embodiment;

Fig. 5 is a flowchart showing a series of processing operations in the communication system according to this embodiment;

Fig. 6 is a flowchart showing a series of processing operations in a communication system according to a second exemplary embodiment;

Fig. 7 is a first view for explaining a method for identifying a frequency characteristic: H(f,r) of attenuation amount in a communication line (600) based on a line length: r of the communication line (600);

Fig. 8 is a second view for explaining a method for identifying the frequency characteristic: H(f,r) of attenuation amount in the communication line (600) based on the line length: r of the communication line (600);

Fig. 9 is a flowchart showing a series of processing operations in a communication system according to a third exemplary embodiment;

Fig. 10 is a diagram showing an example of a result of measuring a crosstalk noise on the communication line (300) used by the xDSL installed in the center adjacent to the remote terminal (400);

Fig. 11 is a diagram showing a value of a transmission PSD employed by the xTU-0 (402) for transmitting a signal to a communication line (500), and showing a relationship between a predetermined transmission PSD "A" and a down transmission PSD "B" calculated for suppressing influence of crosstalk;

Fig. 12 is a diagram showing the value of the transmission output value employed by the xTU-0 (402) for transmitting the signal to the communication line (500), and showing the case where the xTU-C (100) employs the down transmission PSD "B shown in Fig. 11" calculated to suppress influence of crosstalk in a range less than 13 MHz, employs the predetermined transmission PSD "A shown in Fig. 11" in a range equal to or more than 13 MHz, and transmits the signal to the communication line (500);

Fig. 13 is a diagram for illustrating a method that the xTU-0 (402) determines whether or not there is far end crosstalk "FEXT" of uplink in the communication line (300) employed by the xDSL installed in the center adjacent to the remote terminal (400).

EXEMPLARY EMBODIMENT

<Outline of communication system according to this embodiment>

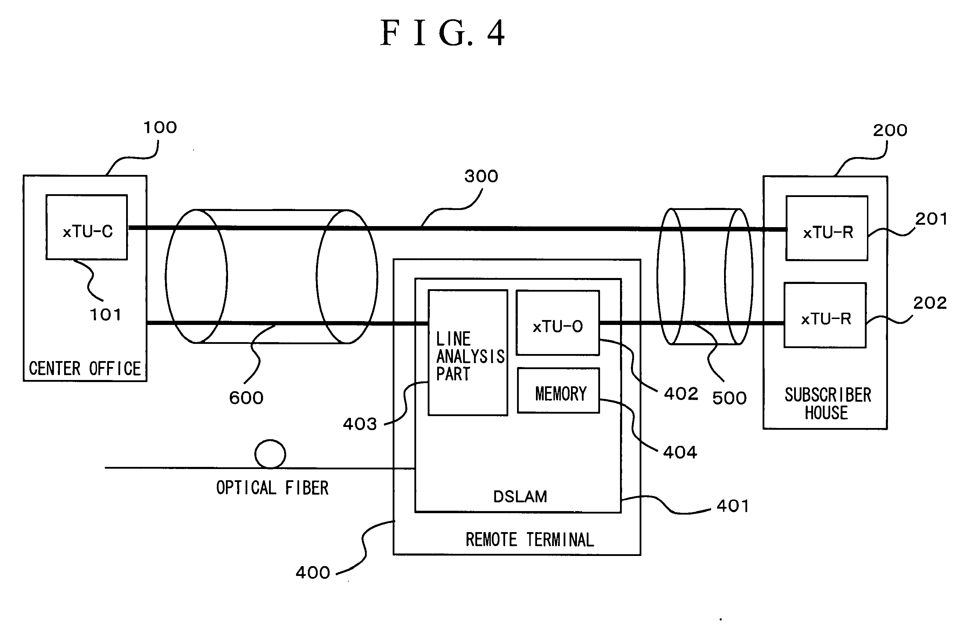

Referring first to Fig. 4, a communication system according to an embodiment will be outlined below.

The communication system of this embodiment is the communication system configured so that a first communication device (corresponding to a DSLAM: 401) and a second communication device (corresponding to an xTU-R: 202) are connected via a communication line (500).

The first communication device (401) is installed in a remote terminal (400) that exists between a center office (100) and a subscriber house (200). And the first communication device (401) is characterized by controlling a transmission output of an xDSL for use in the communication line (500), based on a frequency characteristic of attenuation amount in a center office line (corresponding to a communication line: 600) between the center office (100) and the remote terminal (400).

Thereby, the communication system according to this embodiment can suppress crosstalk of the communication device (401) installed in the remote terminal (400). Consequently, the communication system can prevent the crosstalk of the communication device (401) installed in the remote terminal (400) from affecting the existent xDSL installed in the center. Hereinafter, with reference to the accompanying drawings, the communication system of this embodiment will be described below in detail.

(First exemplary embodiment)

<System configuration of communication system>

Referring first to Fig. 4, a system configuration of a communication system according to a first exemplary embodiment will be described below.

The communication system according to this embodiment is configured so that an xTU-C (xDSL Termination Unit-Center side) (101) that is a device at the center office side and an xTU-R (xDSL Termination Unit-Remote side) (201) that is a device at the subscriber house side are connected via a communication line (300). Thereby, an xDSL installed in the center is configured. The xTU-C (101) is installed in the center office (100) and the xTU-R (201) is installed in the subscriber house (200).

Also, a DSLAN (Digital Subscriber Line Access Multiplexer) (401) that is a device at the remote terminal side and an xTU-R (202) that is a device at the subscriber house side are connected via a communication line (500). Thereby, the xDSL installed in the remote terminal is configured. The DSLAM (401) is installed in the remote terminal (400), and the xTU-R (202) is installed in the subscriber house (200). Also, the remote terminal (400) exists between the center office (100) and the subscriber house (200) as shown in Fig. 4. Also, the remote terminal (400) and the center office (100) are connected via the communication line (600).

<Internal configuration of DSLAM: 401>

An internal configuration of the DSLAM (401) will be described below.

The DSLAM (401) in this embodiment includes an xTU-0 (xDSL Termination Unit-ONU) (402) a line analysis part (403), and a memory (404) that are devices at the remote terminal side. The line analysis part (403) analyzes the communication line (600) between the remote terminal (400) and the center office (100) to identify the frequency characteristic of attenuation amount in the communication line (600).

<Processing operation>

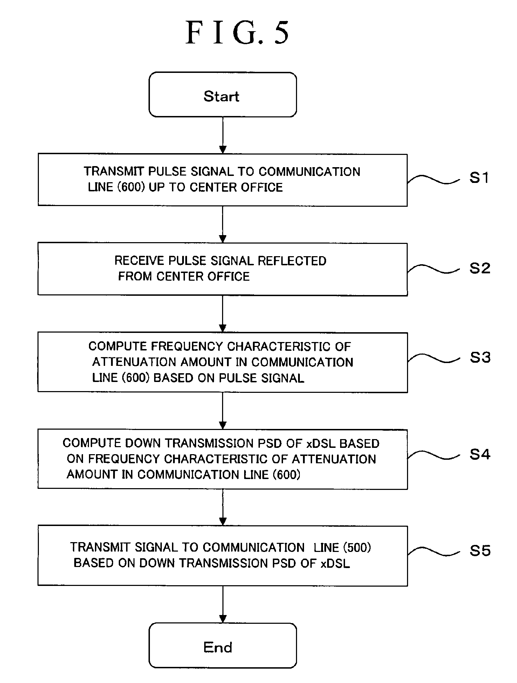

Referring to Fig. 5, the processing operation performed in the DSLAM as shown in Fig. 4 will be described below.

First, the line analysis part (403) transmits a pulse signal to the communication line (600) using a TDR (Time Domain Reflectometry) measurement (step S1). The pulse signal transmitted from the remote terminal (400) is reflected from the center office (100), and the reflected pulse signal is returned to the remote terminal (400). Thereby, the line analysis part (403) receives the pulse signal reflected from the center office (100) (step S2).

Then, the line analysis part (403) computes the frequency characteristic of attenuation amount in the communication line (600) between the center office (100) and the remote terminal (400), based on the pulse signal received at step S2, and records the computed frequency characteristic of attenuation amount in the communication line (600) in the memory (404) (step S3).

The frequency characteristic computed at step S3 based on the pulse signal received at step S2 contains a two-way amount on the communication line (600). Therefore, the line analysis part (403) records the half value of the calculated frequency characteristic in the memory (404).

Then, an xTU-0 (402) computes the down transmission PSD of the xDSL based on the frequency characteristic of attenuation amount in the communication line (600) by referring to the memory (404) (step S4).

For example, it is assumed that the predetermined transmission output value is PSD(f), and the frequency characteristic of attenuation amount in the communication line (600) is |H(f)|. In this case, the transmission output valued PSD of the signal transmitted from the xTU-0 (402) to the communication line (500) is calculated in accordance with the following formula (2).

$$PSD = PSD(f) - |H(f)| \quad \cdots \quad \text{Formula}(2)$$

Then, the xTU-0 (402) transmits a signal to the communication line (500), based on the down transmission PSD computed in accordance with the formula (2) (step S5).

<Action and effect in the communication system of this embodiment>

In this way, in the communication system of this embodiment, the DSLAM (401) installed in the remote terminal (400) first calculates the frequency characteristic of attenuation amount in the communication line (600) between the center office (100) and the remote terminal (400), based on the pulse signal. Then, the DSLAM (401) computes the down transmission PSD of the xDSL, based on the calculated frequency characteristic of attenuation amount in the communication line (600). And the DSLAM (401) transmits the signal to the communication line (500), based on the computed down transmission PSD.

Thereby, the DSLAM (401) can control the transmission output of the xDSL for use in the communication line (500) between the remote terminal (400) and the subscriber house (200), based on the frequency characteristic of attenuation amount in the communication line (600) between the center office (100) and the remote terminal (400), and regulate the transmission output of the DSLAM (401) installed in the remote terminal. Accordingly, it is possible to prevent the crosstalk of the DSLAM (401) installed in the remote terminal (400) from affecting the existent xDSL installed in the center.

Also, the DSLAM (401) can automatically identify the frequency characteristic of attenuation amount in the communication line (600) by computing the frequency characteristic of attenuation amount in the communication line (600), using the pulse signal for measurement of TDR. Thereby, the DSLAM (401) can control the transmission output of the xDSL for use in the communication line (500), based on the automatically identified frequency characteristic, making the process more efficient.

Also, the DSLAM (401) can identify the actual frequency characteristic of attenuation amount in the communication line (600) between the center office (100) and the remote terminal (400) by computing the frequency characteristic of attenuation amount in the communication line (600) using the pulse signal for measurement of TDR. Thereby, the DSLAM (401) can control the transmission output of the xDSL for use in the communication line (500) by reflecting the actual frequency characteristic of attenuation amount in the communication line (600), and regulate precisely the transmission output of the DSLAM (401) installed in the remote terminal.

(Second exemplary embodiment)

Next, a second exemplary embodiment will be described below.

In the first exemplary embodiment, the DSLAM (401) identifies the frequency characteristic of attenuation amount in the communication line (600) between the center office (100) and the remote terminal (400), using the pulse signal for measurement of TDR.

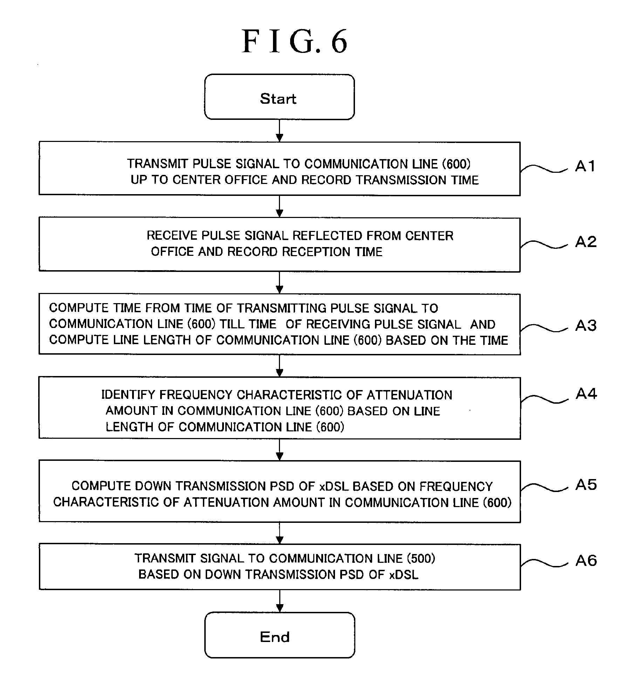

In the second exemplary embodiment, the DSLAM (401) identifies the line length of the communication line (600) between the center office (100) and the remote terminal (400) using the pulse signal for measurement of TDR, and identifies the frequency characteristic of attenuation amount in the communication line (600), based on the identified line length of the communication line (600). Thereby, the DSLAM (401) can automatically identify the frequency characteristic of attenuation amount in the communication line (600) in the same way as in the first exemplary embodiment. Hereinafter, with reference to Fig. 6, the communication system of this embodiment will be described.

Since the communication system in this embodiment is configured in the same way as in the first exemplary embodiment shown in Fig. 4, and the process performed in the DSLAM (401) is different from that of the first exemplary embodiment, the processing operation performed in the DSLAM (401) will be described below in detail.

<Processing operation>

Next, with reference to Fig. 6, the processing operation performed in the DSLAM (401) as shown in Fig. 4 will be described.

First, the line analysis part (403) transmits a pulse signal to the communication line (600) using the TDR (Time Domain Reflectometry) measurement to record the transmission time (step A1). The pulse signal transmitted from the remote terminal (400) is reflected from the center office (100), and the reflected pulse signal is returned to the remote terminal (400). Thereby, the line analysis part (403) receives the pulse signal reflected from the center office (100). At this time, the line analysis part (403) records the reception time of receiving the pulse signal (step A2).

Then, the line analysis part (403) computes the time T (T= reception time - transmission time) from the time of transmitting the pulse signal to the communication line (600) till the time of receiving the pulse signal, based on the transmission time and the reception time. And the line analysis part computes the line length r of the communication line (600), based on the computed time T and the transmission speed V of the pulse signal (step A3). The line length r of the communication line (600) is computed in accordance with r=VxT, for example.

The above computation method is exemplary, and any method can be employed, as far as the line length r of the communication line (600) can be identified based on the time from the time of transmitting the pulse signal to the communication line (600) till the time of receiving the pulse signal reflected from the center office (100).

For example, the line length r of the communication line (600) can be computed in view of a transmission delay of the pulse signal in the above calculation formula.

Then, the line analysis part (403) identifies the frequency characteristic of attenuation amount in the communication line (600), based on the line length r of the communication line (600), and records in the memory (404) the identified frequency characteristic of attenuation amount in the communication line (600) (step A4).

For example, assuming that the attenuation amount per km in the communication line (600) is |H1(f)| I and the line length of the communication line (600) is r, the frequency characteristic |H(f)| of attenuation amount in the communication line (600) can be calculated in accordance with the following formula (3).

$$\left| H\left( f \right) \right| = \left| H1\left( f \right) \right| \times r \quad \cdots \quad \text{Formula}(3)$$

Then, the xTU-0 (402) computes the down transmission PSD of the xDSL, based on the frequency characteristic of attenuation amount in the communication line (600) by referring to the memory (404), in accordance with the formula (2) (step A5).

And the xTU-0 (402) transmits the signal to the communication line (500), based on the transmission PSD computed in accordance with the formula (2) (step A6).

<Action and effect in the communication system of this embodiment>

In this way, in the communication system of this embodiment, the DSLAM (401) installed in the remote terminal (400) first identifies the line length r of the communication line (600) between the center office (100) and the remote terminal (400), based on the time T (T= reception time - transmission time) from the time of transmitting the pulse signal till the time of receiving the signal. And the DSLAM (401) identifies the frequency characteristic of attenuation amount in the communication line (600), based on the identified line length r of the communication line (600). Thereby, the DSLAM (401) can automatically identify the frequency characteristic of attenuation amount in the communication line (600) in the same way as in the first exemplary embodiment.

A method for identifying the frequency characteristic H(f,r) of attenuation amount in the communication line (600) based on the line length r of the communication line (600) may use an algorithm or a database for calculating the frequency characteristic.

In the case of calculating the frequency characteristic of attenuation amount in the communication line (600) using the algorithm, the line analysis part (403) holds beforehand a calculation expression for the frequency characteristic depending on the line length r of the communication line (600).

And the line analysis part (403) computes the frequency characteristic H(f,r) of attenuation amount in the communication line (600) corresponding to the line length r of the communication line (600), based on the line length r of the communication line (600).

Also, the line analysis part (403) may hold a plurality of calculation expressions for the frequency characteristic according to the kind of line, specify one of the plurality of calculation expressions, and compute the frequency characteristic H(f,r) corresponding to the line length r of the communication line (600) using the specified calculation expression.

In this case, the line analysis part (403) identifies beforehand the kind of line (e.g., PE cable having a diameter of 0.4mm) of the communication line (600), and computes the frequency characteristic H(f,r) of attenuation amount in the communication line (600) corresponding to the line length r of the communication line (600) using the calculation expression according to the kind of line (PE cable having a diameter of 0.4mm).

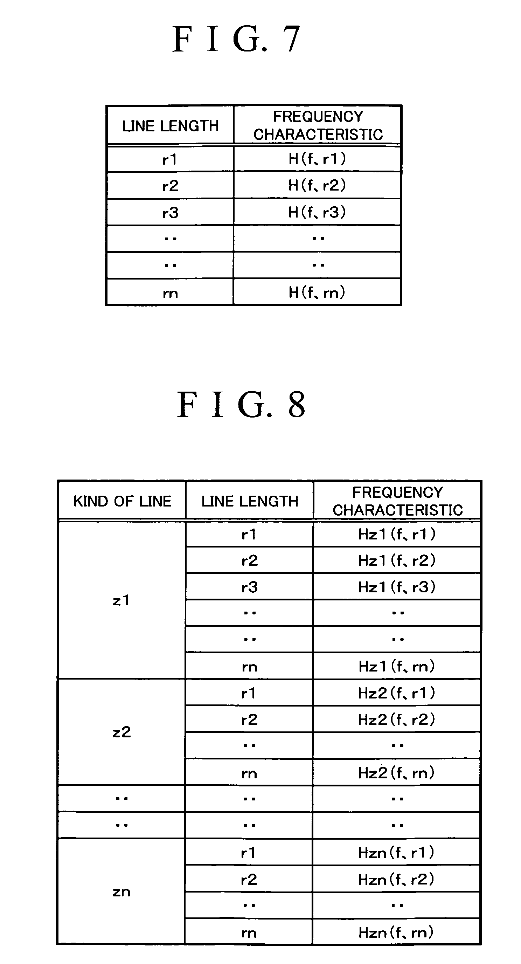

In the case of calculating the frequency characteristic of attenuation amount in the communication line (600) using a database, the line length rn (n: any integer number) of the communication line (600) and the frequency characteristic H(f,rn) of attenuation amount in the communication line (600) are stored associated therewith in the database, as shown in Fig. 7. And the line analysis part (403) searches the database based on the line length rn of the communication line (600) and acquires the frequency characteristic H(f,rn) of attenuation amount in the communication line (600) associated with the line length rn of the communication line (600) from the database.

Also, the line length rn of the communication line (600), the kind of line zn of the communication line (600) and the frequency characteristic Hzn(f,rn) of attenuation amount in the communication line (600) are stored associated therewith in the database, as shown in Fig. 8. And the line analysis part (403) identifies the kind of line zn of the communication line (600), searches the database based on the line length rn of the communication line (600) and the kind of line zn of the communication line (600), and acquires the frequency characteristic Hzn(f,rn) of attenuation amount in the communication line (600) associated with the line length rn of the communication line (600) and the kind of line zn of the communication line (600) from the database.

In this way, the line analysis part (403) can identify the frequency characteristic H(f,r) of attenuation amount in the communication line (600) using the algorithm or database.

(Third exemplary embodiment)

Next, a third exemplary embodiment will be described below.

The DSLAM (401) in the third exemplary embodiment estimates a used band of the communication line (300)

which is used by the xDSL installed in the center adjacent to the remote terminal (400) and estimates the used band which is used by the xDSL installed in the center. And within a range of used band which is used by the xDSL installed in the center, the DSLAM (401) controls the transmission output of the signal outputted to the communication line (500), using the down transmission PSD computed in the first and second exemplary embodiments as above described, to suppress influence of the crosstalk. Also, out of the range of used frequency band which is used by the xDSL installed in the center, the DSLAM (401) controls the transmission output of the signal outputted to the communication line (500) using a predetermined transmission PSD (e.g., maximum transmission PSD).

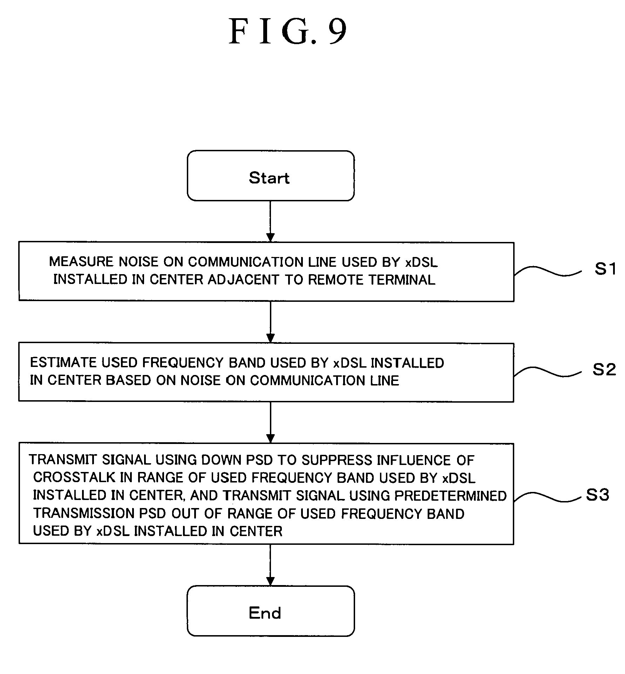

Thereby, in the frequency band not used by the xDSL installed in the center adjacent to the remote terminal (400), the DSLAM (401) can transmit the signal at the predetermined transmission PSD (e.g., maximum transmission PSD) as the transmission PSD of the communication line (500), whereby the DSLAM (401) can suppress influence of the crosstalk while restraining a degradation of the transmission speed of the xDSL on the communication line (500) to the minimum. Hereinafter, with reference to Fig. 9, the communication system of this embodiment will be described below.

Since the communication system in this embodiment is configured in the same way as in the first exemplary embodiment shown in Fig. 4 and the process performed in the DSLAM (401) is different from that of the above embodiments, the processing operation performed in the DSLAM (401) will be described below in detail.

<Processing operation>

Hereinafter, with reference to Fig. 9, the processing operation performed in the DSLAM (401) as shown in Fig. 4 will be described below.

First, the xTU-0 (402) measures the crosstalk noise on the communication line (300) which is used by the xDSL installed in the center adjacent to the remote terminal (400), using a spectral analyzer or the like (step B1). A measurement method for the crosstalk noise on the communication line (300) is not limited to the above measurement method, but any other method can be employed, in which the measurement may be made using a modem, for example.

Then, the xTU-0 (402) estimates the used frequency band which is used by the xDSL installed in the center, based on the crosstalk noise on the communication line (300) measured at step B1 (step B2).

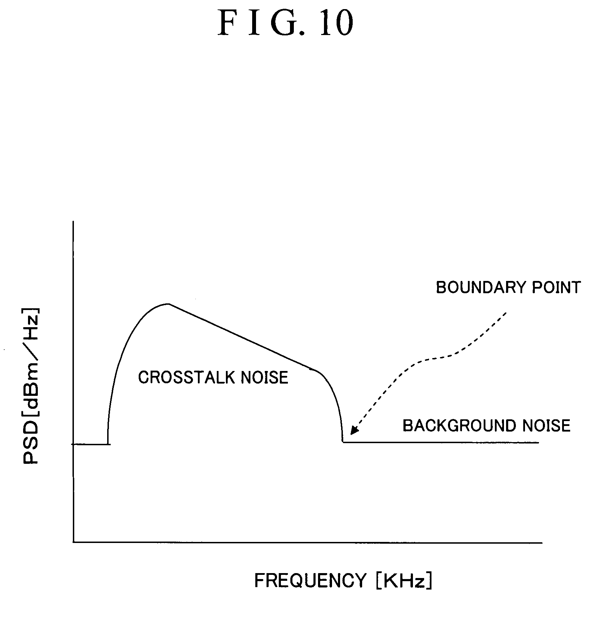

For example, it is assumed that a measurement result as shown in Fig. 10 has been obtained as a result of measuring the crosstalk noise on the communication line (300). In this case, the xTU-0 (402) can estimate the used frequency band which is used by the xDSL installed in the center by identifying the frequency band at a "boundary point" between "crosstalk noise" from the xDSL installed in the center and "background noise". It should be noted that "background noise" is a noise including a white noise generated by the DSLAM (401) itself or the like, and is a basic noise which occurs on the communication line (300) in a normal state. It should be noted that the frequency band in which "crosstalk noise" from the xDSL installed in the center has occurred corresponds to the used frequency band which is used by the xDSL installed in the center.

Then, within the range of used frequency band which is used by the xDSL installed in the center, the xTU-0 (402) transmits the signal to the communication line (500), based on the down transmission PSD computed in the first and second exemplary embodiments as above described, to suppress influence of the crosstalk. Also, out of the range of used frequency band which is used by the xDSL installed in the center, the xTU-0 (402) transmits the signal to the communication line (500), based on the predetermined transmission PSD (step B3).

As the predetermined transmission PSD, the maximum transmission PSD may be applied as disclosed in the ITU-T recommendation G.993.2 or ITU-T recommendation G.993.3.

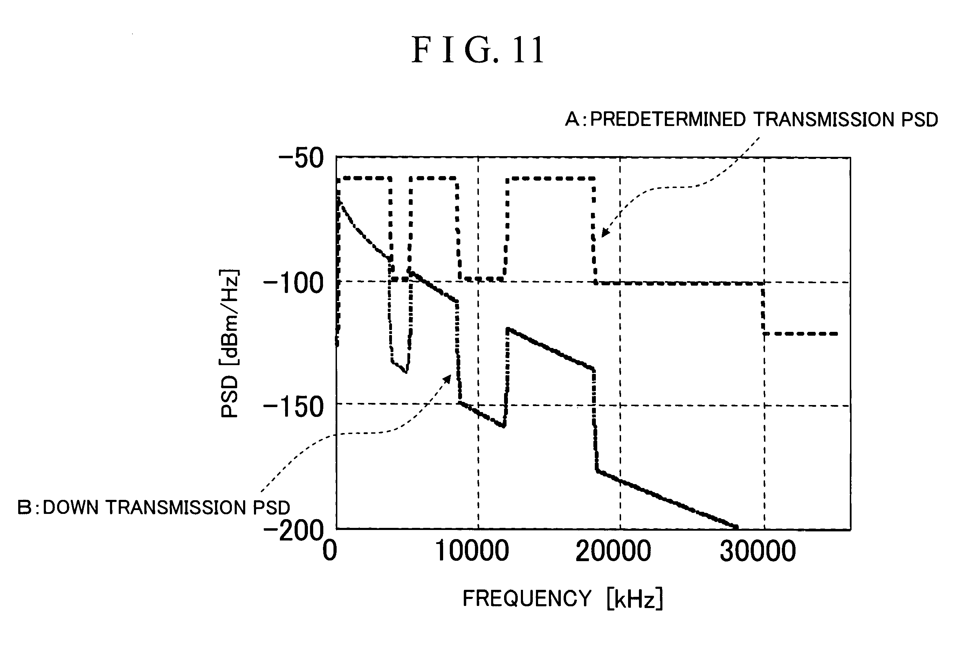

An exemplary relationship between the down transmission PSD computed to suppress influence of the crosstalk and the predetermined transmission PSD is shown in Fig. 11. The predetermined transmission PSD corresponds to "A" shown in Fig. 11, and the down transmission PSD computed to suppress influence of the crosstalk corresponds to "B" shown in Fig. 11.

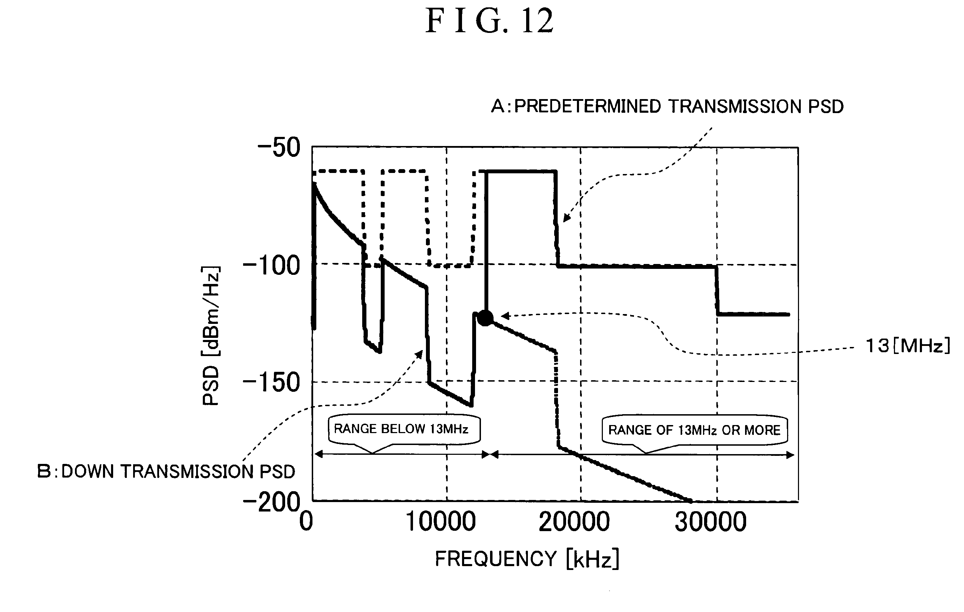

For example, if "crosstalk noise" on the communication line (300) is in a range less than 13MHz, the xTU-0 (402) estimates that the used frequency band which is used by the xDSL installed in the center is "13MHz". Therefore, the xTU-0 (402) adopts a value as shown with the solid line in Fig. 12, and in the range less than "l3MHz", the xTU-0 (402) adopts the down transmission PSD "B shown in Fig. 11" computed to suppress influence of the crosstalk and transmits the signal to the communication line (500) based on the adopted down transmission PSD.

Also, in a range equal to or more than "13MHz", the xTU-0 (402) adopts the predetermined transmission PSD "A shown in Fig. 11" and transmits the signal to the communication line (500) based on the adopted predetermined transmission PSD.

In this way, the xTU-0 (402) in this embodiment first estimates the used frequency band which is used by the xDSL installed in the center adjacent to the remote terminal (400). And within the range of the used frequency band which is used by the xDSL installed in the center, the xTU-0 (402) controls the transmission output of the signal outputted to the communication line (500), using the down transmission PSD computed to suppress influence of the crosstalk. Moreover, out of the range of the used frequency band which is used by the xDSL installed in the center, the xTU-0 (402) controls the transmission output of the signal outputted to the communication line (500), using the predetermined transmission PSD.

Thereby, the xTU-0 (402) can transmit the signal at the predetermined transmission PSD (e.g., maximum transmission PSD) as the transmission PSD of the communication line (500) in the frequency band which is not used by the xDSL installed in the center adjacent to the remote terminal (400), and suppress influence of the crosstalk while restraining a degradation of the transmission speed of the xDSL on the communication line (500) to the minimum.

Particularly, if the line length of the communication line (300) of VDSL installed in the center is long, since a high-frequency band cannot be used, the attenuation of the transmission output value is not required with respect to the high-frequency band. Therefore, the above described embodiment becomes an effective method for handling the crosstalk noise in the case where both of the xDSL installed in the center and the xDSL installed in the remote terminal are VDSLs.

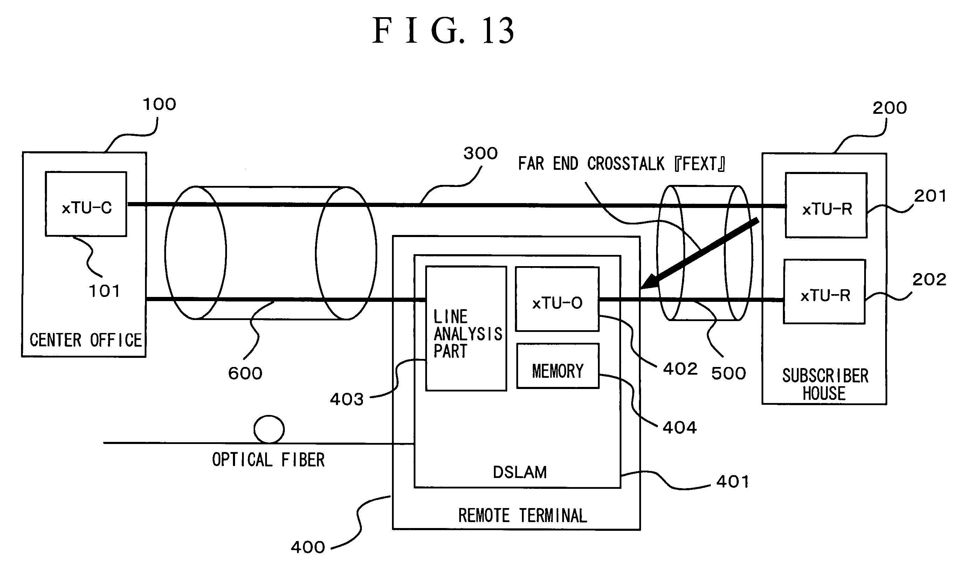

It should be noted that, as a determination method of determining whether or not the xDSL installed in the center adjacent to the remote terminal (400) is VDSL, as shown in Fig. 13, a method that the xTU-0 (402) determines whether or not there is the far end crosstalk "FEXT" of uplink from the communication line (300), which is used by the xDSL installed in the center can be cited.

In the case of applying the above determination method, the xTU-0 (402) first determines whether or not the noise of the far end crosstalk of uplink from the communication line (300) measured at step B1 as shown in Fig. 9 is equal to or more than a predetermined threshold. And if the noise of the far end crosstalk of uplink from the communication line (300) is equal to or more than the predetermined threshold, the xTU-0 (402) determines that the xDSL installed in the center is VDSL. Also, if the noise of the far end crosstalk of uplink from the communication line (300) is less than the predetermined threshold, the xTU-0 (402) determines that the xDSL installed in the center is not VDSL.

That is, if the xDSL installed in the center adjacent to the remote terminal (400) is the VDSL, since a lot of noises of the far end crosstalk of uplink from the communication line (300) will occur, the xTU-0 (402) can determine that the xDSL installed in the center is the VDSL, if the noise of the far end crosstalk of uplink from the communication line (300) is equal to or more than the predetermined threshold.

Thereby, if the xTU-0 (402) determines that the xDSL installed in the center is the VDSL, the xTU-0 (402) does not perform the attenuation control of the transmission output value with respect to the high-frequency band which is used by the VDSL, and can use the predetermined transmission PSD (e.g., maximum transmission PSD) to control the transmission output of the signal to be outputted to the communication line (500).

It should be noted that the above described embodiments are preferred embodiments of the present invention and the scope of the present invention is not limited only to the above described embodiments. The invention may be implemented in the form of various variations of the above described embodiments within a range without departing from the gist of the present invention.

It should be noted that the present invention can be applied to the xDSL (x Digital Subscriber Line) (x is a collective designation of A, H, S, V and the like) which performs a data transmission at a high speed of several M bits/second via a metallic cable such as a telephone line.

An example 1 describes a communication device comprising:

control means for controlling a transmission output of an xDSL for use in a subscriber line between a remote terminal and a subscriber house, based on a frequency characteristic of attenuation amount in a center office line between a center office and the remote terminal,

wherein the communication device is installed in the remote terminal that exists between the center office and the subscriber house.

An example 2 describes the communication device according to the example 1, further comprising identification means for identifying the frequency characteristic of attenuation amount in the center office line, wherein the control means controls the transmission output of the xDSL, based on the frequency characteristic of attenuation amount in the center office line specified by the identification means.

An example 3 describes the communication device according to the examples 1 or 2, wherein the control means controls the transmission output of the xDSL by computing a down transmission output value of the xDSL, based on the frequency characteristic of attenuation amount in the center office line and transmitting a signal to the subscriber line using the computed transmission output value.

An example 4 describes the communication device according to the example 3, further comprising estimation means for estimating a used band for use in an adjacent line adjacent to the remote terminal, wherein the control means transmits the signal to the subscriber line, using the computed transmission output value, within a range of the used band, and transmits the signal to the subscriber line, using a predetermined transmission output value out of a range of the used band.

An example 5 describes the communication device according to the example 2, wherein the identification means identifies the frequency characteristic of attenuation amount in the center office line using a signal for measurement of a TDR (Time Domain Reflectometry).

An example 6 describes the communication device according to the example 5, wherein the identification means transmits the signal to the center office line, receives the signal reflected from the center office, and identifies the frequency characteristic of attenuation amount in the center office line, based on the received signal.

An example 7 describes the communication device according to the example 2, wherein the identification means identifies a line length of the center office line, and identifies the frequency characteristic of attenuation amount in the center office line corresponding to the identified line length.

An example 8 describes the communication device according to the example 2, further comprising storage means for storing a line length of the center office line and the frequency characteristic of attenuation amount in the center office line, being associated with each other wherein the identification means identifies the line length of the center office line, and identifies the frequency characteristic of attenuation amount in the center office line corresponding to the identified line length from the storage means.

An example 9 describes the communication device according to the example 2, further comprising storage means for storing a line length of the center office line and a kind of line for the center office line and the frequency characteristic of attenuation amount in the center office line, being associated with one another wherein the identification means identifies the line length of the center office line and the kind of line for the center office line, and identifies the frequency characteristic of attenuation amount in the center office line corresponding to the identified line length and kind of line from the storage means.

An example 10 describes the communication device according to any one of the examples 7 to 9, wherein the identification means identifies the line length of the center office line, based on time from time of transmitting the signal to the center office line till time of receiving the signal reflected from the center office.

An example 11 describes a communication system comprising:

a first communication device; and
a second communication device connected to the first communication device via a communication line,

wherein the first communication device is installed in a remote terminal that exists between a center office and a subscriber house, and the first communication device includes control means for controlling a transmission output of an xDSL for use in the communication line based on a frequency characteristic of attenuation amount in a center office line between the center office and the remote terminal.

An example 12 describes the communication system according to the example 11, wherein the first communication device comprises identification means for identifying the frequency characteristic of attenuation amount in the center office line, and the control means controls the transmission output of the xDSL, based on the frequency characteristic of attenuation amount in the center office line that is identified by the identification means.

An example 13 describes a control method for use in a communication device, comprising:

a control step of controlling a transmission output of an xDSL for use in a subscriber line between a remote terminal and a subscriber house, based on a frequency characteristic of attenuation amount in a center office line between a center office and the remote terminal,

wherein the communication device is installed in the remote terminal that exists between the center office and the subscriber house.

An example 14 describes the control method according to the example 13, further comprising an identification step of identifying the frequency characteristic of attenuation amount in the center office line, the identification step being performed by the communication device, wherein the control step controls the transmission output of the xDSL, based on the frequency characteristic of attenuation amount in the center office line that is identified at the identification step.

An example 15 describes a storage medium storing a control program causing a communication device to perform a control process, comprising:

controlling a transmission output of an xDSL for use in a subscriber line between a remote terminal and a subscriber house, based on a frequency characteristic of attenuation amount in a center office line between a center office and the remote terminal,

wherein the communication device is installed in the remote terminal that exists between the center office and the subscriber house.

An example 16 describes the storage medium storing the control program according to the example 15, causing the communication device to perform an identification process of identifying the frequency characteristic of attenuation amount in the center office line, wherein the control process controls the transmission output of the xDSL, based on the frequency characteristic of attenuation amount in the center office line specified by the identification process.

The present application also provides a communications device comprising: i) an input port for connecting the device to a central office via a central office connection line; ii) means for receiving data signals from the central office via said input port; iii) an output port for connecting the device to a subscriber device via a subscriber connection line; iv) means for outputting data signals to said subscriber device via said output port; v) means for obtaining a frequency attenuation characteristic of the central office connection line; and vi) means for controlling a transmission power of said outputting means based on the obtained frequency attenuation characteristic.

**Claims**

1. A communication device comprising:

   control means for controlling a transmission output of an xDSL for use in a subscriber line between a remote terminal and a subscriber house, based on a frequency characteristic of attenuation amount in a center office line between a center office and the remote terminal,

   wherein the communication device is installed in the remote terminal that exists between the center office and the subscriber house.

2. The communication device according to claim 1, further comprising identification means for identifying the frequency characteristic of attenuation amount in the center office line, wherein the control means controls the transmission output of the xDSL, based on the frequency characteristic of attenuation amount in the center office line specified by the identification means.

3. The communication device according to claim 1 or 2, wherein the control means controls the transmission output of the xDSL by computing a down transmission output value of the xDSL, based on the frequency characteristic of attenuation amount in the center office line and transmitting a signal to the subscriber line using the computed transmission output value.

4. The communication device according to claim 3, further comprising estimation means for estimating a used band for use in an adjacent line adjacent to the remote terminal, wherein the control means transmits the signal to the subscriber line, using the computed transmission output value, within a range of the used band, and transmits the signal to the subscriber line, using a predetermined transmission output value out of a range of the used band.

5. The communication device according to claim 2, wherein the identification means identifies the frequency characteristic of attenuation amount in the center office line using a signal for measurement of a TDR (Time Domain Reflectometry).

6. The communication device according to claim 5, wherein the identification means transmits the signal to the center office line, receives the signal reflected from the center office, and identifies the frequency characteristic of attenuation amount in the center office line, based on the received signal.

7. The communication device according to claim 2, wherein the identification means identifies a line length of the center office line, and identifies the frequency characteristic of attenuation amount in the center office line corresponding to the identified line length.

8. The communication device according to claim 2, further comprising storage means for storing a line length of the center office line and the frequency characteristic of attenuation amount in the center office line, being associated with each other wherein the identification means identifies the line length of the center office line, and identifies the frequency characteristic of attenuation amount in the center office line corresponding to the identified line length from the storage means.

9. The communication device according to claim 2, further comprising storage means for storing a line length of the center office line and a kind of line for the center office line and the frequency characteristic of attenuation amount in the center office line, being associated with one another wherein the identification means identifies the line length of the center office line and the kind of line for the center office line, and identifies the frequency characteristic of attenuation amount in the center office line corresponding to the identified line length and kind of line from the storage means.

10. The communication device according to any one of claims 7 to 9, wherein the identification means identifies the line length of the center office line, based on time from time of transmitting the signal to the center office line till time of receiving the signal reflected from the center office.

11. A communication system comprising:

a first communication device; and
a second communication device connected to the first communication device via a communication line,

wherein the first communication device is installed in a remote terminal that exists between a center office and a subscriber house, and the first communication device includes control means for controlling a transmission output of an xDSL for use in the communication line based on a frequency characteristic of attenuation amount in a center office line between the center office and the remote terminal.

12. The communication system according to claim 11, wherein the first communication device comprises identification means for identifying the frequency characteristic of attenuation amount in the center office line, and the control means controls the transmission output of the xDSL, based on the frequency characteristic of attenuation amount in the center office line that is identified by the identification means.

13. A control method for use in a communication device, comprising:

a control step of controlling a transmission output of an xDSL for use in a subscriber line between a remote terminal and a subscriber house, based on a frequency characteristic of attenuation amount in a center office line between a center office and the remote terminal,

wherein the communication device is installed in the remote terminal that exists between the center office and the subscriber house.

14. The control method according to claim 13, further comprising an identification step of identifying the frequency characteristic of attenuation amount in the center office line, the identification step being performed by the communication device, wherein the control step controls the transmission output of the xDSL, based on the frequency characteristic of attenuation amount in the center office line that is identified at the identification step.

15. A storage medium storing a control program causing a communication device to perform a control process, comprising:

controlling a transmission output of an xDSL for use in a subscriber line between a remote terminal and a subscriber house, based on a frequency characteristic of attenuation amount in a center office line between a center office and the remote terminal,

wherein the communication device is installed in the remote terminal that exists between the center office and the subscriber house.

# FIG. 1

FAR END CROSSTALK "FEXT"

COMMUNICATION LINE : 2

CROSSTALK SOURCE (IN THE SAME
DIRECTION AS TARGET LINE)

COMMUNICATION LINE : 1

TARGET LINE

COMMUNICATION LINE : 3

CROSSTALK SOURCE (DIRECTION
OPPOSITE TO TARGET LINE)

NEAR END CROSSTALK "NEXT"

EP 2 037 665 A2

# FIG. 2

EP 2 037 665 A2

# FIG. 3

FAR END CROSSTALK "FEXT"

10

30  xDSL INSTALLED
    IN CENTER

20

21

xTU-C

xTU-O

xTU-R

xTU-R

CENTER OFFICE

31'

40

xDSL INSTALLED
IN REMOTE TERMINAL

31

SUBSCRIBER

# F I G. 4

CENTER OFFICE 100

xTU-C 101

300

600

OPTICAL FIBER

REMOTE TERMINAL 400

DSLAM 401

LINE ANALYSIS PART 403

xTU-O 402

MEMORY 404

500

SUBSCRIBER HOUSE 200

xTU-R 201

xTU-R 202

EP 2 037 665 A2

# F I G. 5

```
                    ┌──────────────┐
                    │    Start     │
                    └──────┬───────┘
                           │
                           ▼
   ┌──────────────────────────────────────────┐
   │  TRANSMIT PULSE SIGNAL TO COMMUNICATION   │ ⌇ S1
   │  LINE (600) UP TO CENTER OFFICE           │
   └──────────────────┬───────────────────────┘
                      │
                      ▼
   ┌──────────────────────────────────────────┐
   │       RECEIVE PULSE SIGNAL REFLECTED      │ ⌇ S2
   │          FROM CENTER OFFICE               │
   └──────────────────┬───────────────────────┘
                      │
                      ▼
   ┌──────────────────────────────────────────┐
   │   COMPUTE FREQUENCY CHARACTERISTIC OF     │
   │  ATTENUATION AMOUNT IN COMMUNICATION      │ ⌇ S3
   │   LINE (600) BASED ON PULSE SIGNAL        │
   └──────────────────┬───────────────────────┘
                      │
                      ▼
   ┌──────────────────────────────────────────┐
   │ COMPUTE DOWN TRANSMISSION PSD OF xDSL BASED│
   │ ON FREQUENCY CHARACTERISTIC OF ATTENUATION │ ⌇ S4
   │  AMOUNT IN COMMUNICATION LINE (600)        │
   └──────────────────┬───────────────────────┘
                      │
                      ▼
   ┌──────────────────────────────────────────┐
   │  TRANSMIT SIGNAL TO COMMUNICATION  LINE (500)│ ⌇ S5
   │  BASED ON DOWN TRANSMISSION PSD OF xDSL    │
   └──────────────────┬───────────────────────┘
                      │
                      ▼
                ┌──────────────┐
                │     End      │
                └──────────────┘
```

EP 2 037 665 A2

# F I G. 6

```
                    ┌─────────┐
                    │  Start  │
                    └─────────┘
                         │
                         ▼
┌────────────────────────────────────────────────────────┐
│  TRANSMIT PULSE SIGNAL TO COMMUNICATION LINE (600)      │      A1
│  UP TO CENTER OFFICE AND RECORD TRANSMISSION TIME       │
└────────────────────────────────────────────────────────┘
                         │
                         ▼
┌────────────────────────────────────────────────────────┐
│  RECEIVE PULSE SIGNAL REFLECTED FROM CENTER             │      A2
│  OFFICE AND RECORD RECEPTION TIME                       │
└────────────────────────────────────────────────────────┘
                         │
                         ▼
┌────────────────────────────────────────────────────────┐
│  COMPUTE TIME FROM TIME OF TRANSMITTING PULSE SIGNAL TO │
│  COMMUNICATION LINE (600) TILL TIME  OF RECEIVING       │      A3
│  PULSE SIGNAL  AND COMPUTE LINE LENGTH OF               │
│  COMMUNICATION LINE (600) BASED ON THE TIME             │
└────────────────────────────────────────────────────────┘
                         │
                         ▼
┌────────────────────────────────────────────────────────┐
│  IDENTIFY FREQUENCY CHARACTERISTIC OF ATTENUATION       │      A4
│  AMOUNT IN COMMUNICATION LINE (600) BASED ON LINE       │
│  LENGTH OF COMMUNICATION LINE (600)                     │
└────────────────────────────────────────────────────────┘
                         │
                         ▼
┌────────────────────────────────────────────────────────┐
│  COMPUTE DOWN TRANSMISSION PSD OF xDSL BASED ON         │      A5
│  FREQUENCY CHARACTERISTIC OF ATTENUATION AMOUNT IN      │
│  COMMUNICATION LINE (600)                               │
└────────────────────────────────────────────────────────┘
                         │
                         ▼
┌────────────────────────────────────────────────────────┐
│  TRANSMIT SIGNAL TO COMMUNICATION LINE (500)            │      A6
│  BASED ON DOWN TRANSMISSION PSD OF xDSL                 │
└────────────────────────────────────────────────────────┘
                         │
                         ▼
                    ┌─────────┐
                    │   End   │
                    └─────────┘
```

# F I G. 7

| LINE LENGTH | FREQUENCY CHARACTERISTIC |
|---|---|
| r1 | $H(f, r1)$ |
| r2 | $H(f, r2)$ |
| r3 | $H(f, r3)$ |
| .. | .. |
| .. | .. |
| rn | $H(f, rn)$ |

# F I G. 8

| KIND OF LINE | LINE LENGTH | FREQUENCY CHARACTERISTIC |
|---|---|---|
| z1 | r1 | $Hz1(f, r1)$ |
| | r2 | $Hz1(f, r2)$ |
| | r3 | $Hz1(f, r3)$ |
| | .. | .. |
| | .. | .. |
| | rn | $Hz1(f, rn)$ |
| z2 | r1 | $Hz2(f, r1)$ |
| | r2 | $Hz2(f, r2)$ |
| | .. | .. |
| | rn | $Hz2(f, rn)$ |
| .. | .. | .. |
| .. | .. | .. |
| zn | r1 | $Hzn(f, r1)$ |
| | r2 | $Hzn(f, r2)$ |
| | .. | .. |
| | rn | $Hzn(f, rn)$ |

# FIG. 9

```
        ┌─────────────────┐
        │      Start      │
        └─────────────────┘
                 │
                 ▼
┌──────────────────────────────────────────────────────┐
│ MEASURE NOISE ON COMMUNICATION LINE USED BY xDSL       │  ──── S1
│ INSTALLED IN CENTER ADJACENT TO REMOTE TERMINAL        │
└──────────────────────────────────────────────────────┘
                 │
                 ▼
┌──────────────────────────────────────────────────────┐
│ ESTIMATE USED FREQUENCY BAND USED BY xDSL INSTALLED    │  ──── S2
│ IN CENTER BASED ON NOISE ON COMMUNICATION LINE         │
└──────────────────────────────────────────────────────┘
                 │
                 ▼
┌──────────────────────────────────────────────────────┐
│ TRANSMIT SIGNAL USING DOWN PSD TO SUPPRESS INFLUENCE OF │
│ CROSSTALK IN RANGE OF USED FREQUENCY BAND USED BY xDSL  │
│ INSTALLED IN CENTER, AND TRANSMIT SIGNAL USING PREDETERMINED │  ──── S3
│ TRANSMISSION PSD OUT OF RANGE OF USED FREQUENCY BAND    │
│ USED BY xDSL INSTALLED IN CENTER                       │
└──────────────────────────────────────────────────────┘
                 │
                 ▼
        ┌─────────────────┐
        │       End       │
        └─────────────────┘
```

# FIG. 10

BOUNDARY POINT

CROSSTALK NOISE

BACKGROUND NOISE

PSD[dBm/Hz]

FREQUENCY [KHz]

# FIG. 11

A: PREDETERMINED TRANSMISSION PSD

B: DOWN TRANSMISSION PSD

EP 2 037 665 A2

# FIG. 12

A : PREDETERMINED TRANSMISSION PSD

B : DOWN TRANSMISSION PSD

RANGE BELOW 13MHz

RANGE OF 13MHz OR MORE

13 [MHz]

PSD [dBm/Hz]

FREQUENCY [kHz]

EP 2 037 665 A2

# FIG. 13

CENTER OFFICE 100

xTU-C 101

600

OPTICAL FIBER

REMOTE TERMINAL 400

DSLAM 401

LINE ANALYSIS PART 403

xTU-O 402

MEMORY 404

300

FAR END CROSSTALK 『FEXT』

500

SUBSCRIBER HOUSE 200

xTU-R 201

xTU-R 202

EP 2 037 665 A2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007240019 A
- JP 2003018319 A
- JP 2005184389 A
- JP 2000500948 A
- JP 2006033379 A